# EUROPÄISCHE PATENTSCHRIFT

(11) **EP 0 813 929 B1**
(45) Veröffentlichungstag und Bekanntmachung des Hinweises auf die Patenterteilung: **08.05.2002**
(21) Anmeldenummer: 97109438.8
(22) Anmeldetag: 11.06.1997
(51) Int. Cl.: B23K 26/00, B23K 37/04

(54) **Verfahren zum Herstellen geschweisster Stahlblechplatinen**
Process for manufacturing welded steel plate panels
Procédé de fabrication de panneaux de tôles d'acier soudés

(30) Priorität: 21.06.1996 DE 19624776
(43) Veröffentlichungstag der Anmeldung: 29.12.1997
(73) Patentinhaber: ThyssenKrupp Stahl AG, 47166 Duisburg (DE)
(72) Erfinder: Tenhaven, Ulrich, Dr. Ing., 44229 Dortmund (DE)
(74) Vertreter: Cohausz & Florack Patentanwälte

(56) Entgegenhaltungen:
- EP-A- 0 565 088
- EP-A- 0 565 846
- EP-A- 0 604 247
- EP-A- 0 679 470
- DE-A- 3 009 825
- DE-C- 4 334 199
- THYSSEN TECHNISCHE BERICHTE, Bd. 24, Nr. 1, 1992, DUISBURG DE, Seiten 97-106, XP002041118 CHRISTOPH SCHNEIDER ET AL.: ""Tailored Blanks"- ein Werkstoff für neue Formen der Konstruktion."

## Beschreibung

Die Erfindung betrifft ein Verfahren zum Herstellen geschweißter Stahlblechplatinen gemäß dem Oberbegriff des Patentanspruchs 1.

Die Herstellung von geschweißten Stahlblechplatinen ist bekannt aus der DE 42 35 110 C1 und "Thyssen Technische Berichte", 24 (1992) Heft 1, Seiten 97 ff.

Die EP-A-0 565 088, die als nächstliegender Stand der Technik angesehen wird, zeigt ein Verfahren, wobei ein Zuschnitt in gekrümmter Stellung gehalten wird, während der andere Zuschnitt positioniert wird, und die zwei Zuschnitt in Kontakt gebracht werden, wenn der erste Zuschnitt aus seiner gekrümmten Stellung freigegeben wird.

Hiernach werden Stahlblechplatinen dadurch hergestellt, daß die Zuschnitte mit fertigen Endabmessungen oder Zuschnitte der mehrfachen Länge der angestrebten Fertigplatine durch Schneiden oder Stanzen aus Stahlblechen oder -bändern hergestellt werden, die dann beispielsweise durch Laserschweißen oder Elektronenstrahlschweißen an jeweils einer Kante stumpf miteinander verbunden werden.

Beim Laserschweißen der stumpf gegeneinander zu einem I-Stoß positionierten Blechkanten darf die Spaltbreite zwischen den Blechkanten höchstens 5 % der größeren Blechdicke beziehungsweise maximal 0,10 mm betragen. Größere Spaltbreiten führen zum Nahteinfall, auch Nahtunterwölbung genannt. Hiermit verbunden ist eine Verringerung des tragenden Querschnittes der Schweißnaht, die einerseits zum Reißen der Naht beim Umformen der Schweißplatine, andererseits zum Versagen der Schweißnaht bei statischer oder dynamischer Übertragung von Zug- oder Scherspannungen, wie sie z.B. in einer Automobilkarosserie auftreten, führen.

Das bedeutet, daß die zu verschweißenden Blechkanten in hohem Maße parallel ausgebildet sein müssen.

Bei linearen Nähten wird die Linearität der zu verschweißenden Blechkanten bisher z.B. dadurch ereicht, daß die Blechkanten mit einer Präzisionsschere geschnitten oder mit einer Doppelschnittschere beide Blechkanten gleichzeitig besäumt werden.

Weitere bekannte Verfahren der Kantenbearbeitung bestehen darin, die Schweißkanten mit einem Präzisionswerkzeug zu stanzen oder abzufräsen.

Durch die genannten Verfahren kann eine ausreichende Linearität der Schweißkanten erreicht werden und damit die Spaltbreite zwischen den positionierten Blechkanten auf das für eine einwandfreie Schweißnaht erforderliche Maß begrenzt werden. Dies ist insbesondere dann möglich, wenn von den linearen Blechkanten nur schmale, wenige Millimeter breite Streifen abgeschnitten oder abgefräst werden, so daß eventuell in der Blechtafel vorhandene innere Spannungen nicht ausgelöst werden. Bei nichtlinearen Nähten ist von den genannten Verfahren nur noch das Stanzen anwendbar.

Nichtlineare Nähte können in einem Winkel zueinander angeordnet, stufenförmig versetzt oder bogenförmig verlaufen.

Bei der Herstellung der Blechzuschnitte durch Stanzen kommt es darauf an, daß die Stanzwerkzeuge zur Herstellung der zu verschweißenden Blechkanten eine außerordentlich hohe Genauigkeit aufweisen müssen, um den für eine einwandfreie Laserschweißnaht erforderlichen geringen Spalt zu erreichen. Jedoch reicht die hohe Präzision der Stanzwerkzeuge zur Herstellung der nichtlinearen Schweißkanten allein nicht aus, um die gewünschte Paßgenauigkeit der gegeneinander zu positionierenden Blechzuschnitte zu gewährleisten. Eine weitere Voraussetzung zur Erzielung der geforderten Paßgenauigkeit ist, daß der Formzuschnitt aus einer/einem möglichst spannungsarmen Blechtafel oder -band ausgestanzt wird, da durch das Auslösen innerer Spannungen die Form des Stanzzuschnittes verändert werden kann.

Da kaltgewalzte, geglühte und nachgewalzte Stahlbleche und Stahlbänder aber in der Regel innere Spannungen enthalten, ist immer damit zu rechnen, daß gestanzte Formzuschnitte Formabweichungen aufweisen, die zu nicht tolerierbarer Spaltbildung zwischen den zu verschweißenden Blechkanten führen.

Von daher liegt der Erfindung die Aufgabe zugrunde, ein Verfahren der eingangs genannten Art zu schaffen, mit dem die Spaltbildung beim Laserschweißen von Formzuschnitten mit nichtlinearer Naht auf einfache Weise vermieden und damit die oben beschriebenen Nachteile vermieden werden können.

Gelöst wird die Aufgabe durch die Merkmale von Patentanspruch 1. Vorteilhafte Ausgestaltungen ergeben sich aus den Unteransprüchen.

Nach der erfindungsgemäßen Lösung werden vor dem Ausstanzen des Formzuschnittes in die Blechtafel, z.B. von der Stanzkante ausgehende fächerförmige Wölbungen eingedrückt, und anschließend wird die äußere Form ausgestanzt. Dazu wird ein Stahlband in ein Preß- und Stanzwerkzeug eingeführt und durch Tiefziehen die Wölbung in das Stahlband eingepreßt. Anschließend wird z.B. durch Absenken des integrierten Stanzwerkzeuges das vorgeformte Stanzteil aus dem Stahlband herausgetrennt. Die so vorgeformten Stanzteile können nun mit den Gegenstücken gepaart werden. Dann werden die hochstehenden Wölbungen des vorgeformten Zuschnittes durch eine geeignete Vorrichtung gegen die Unterlage gedrückt. Dies hat zur Folge, daß die zu verschweißende Kante des vorgeformten Zuschnittes in Richtung des Gegenstückes ausweicht, sich in jedem Bereich an dessen Schweißkante anlegt und damit jede Spaltbildung sicher vermieden wird. Diese Wölbungen können selbstverständlich auch in beide der zu paarenden Formzuschnitte eingepreßt werden, um eine spaltfreie Passung zu erreichen.

Vorzugsweise werden die gegeneinander spaltfrei positionierten Blechkanten zunächst mit einem Laser über die Nahtlänge punktförmig geheftet und anschließend mit einem Laser verschweißt. Bei dreiteiligen oder mehrteiligen Schweißplatinen werden mindestens zwei Formzuschnitte mit vorgeformten Wölbungen zur Korrektor von Formabweichungen der Schweißkanten versehen.

Verschiedene Ausführungen des erfindungsgemäßen Verfahrens sind in der Zeichnung dargestellt und im folgenden näher erläutert.

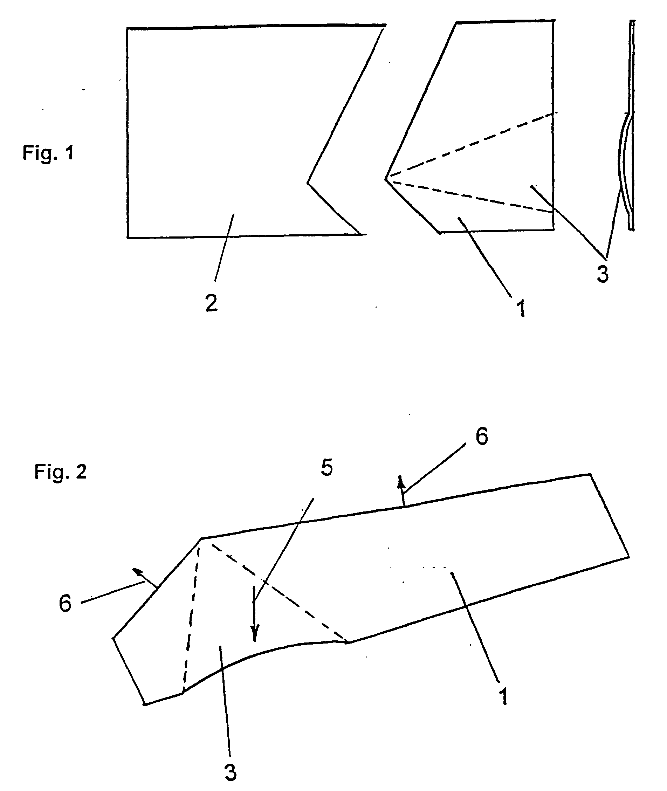

Es zeigen
- Fig. 1: einen Formzuschnitt 1 mit einer eingepreßten fächerförmigen Wölbung 3 vor der Paarung mit einem Formzuschnitt 2,
- Fig. 2: eine perspektivische Ansicht des Formzuschnittes 1 nach Fig. 1 mit der eingepreßten fächerförmigen Wölbung 3. Durch eine geeignete Kraft 5 auf die Wölbung 3 weichen die Schweißkanten des Formzuschnittes 1 in Richtung der Pfeile 6 aus,
- Fig.3: einen Formzuschnitt mit stufenförmig angeordneten Schweißkanten 7 und einer eingepreßten tonnenförmigen Wölbung 8 vor der Paarung mit dem entsprechenden Formzuschnitt 2,

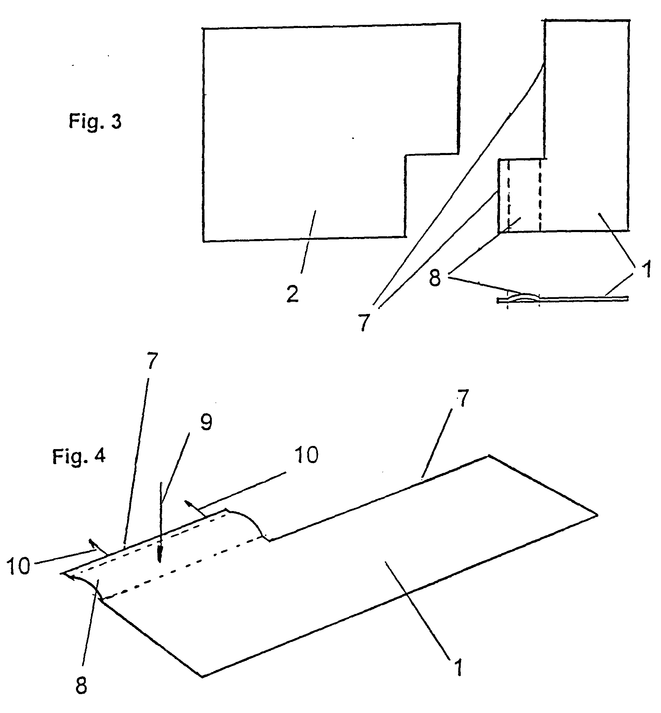

- Fig.4: eine perspektivische Ansicht des Formzuschnittes 1 nach Fig. 3 mit der eingepreßten tonnenförmigen Wölbung 8. Durch eine geeignete Kraft 9 auf die Wölbung 8 weicht die Schweißkante 7 in Richtung der Pfeile 10 aus,

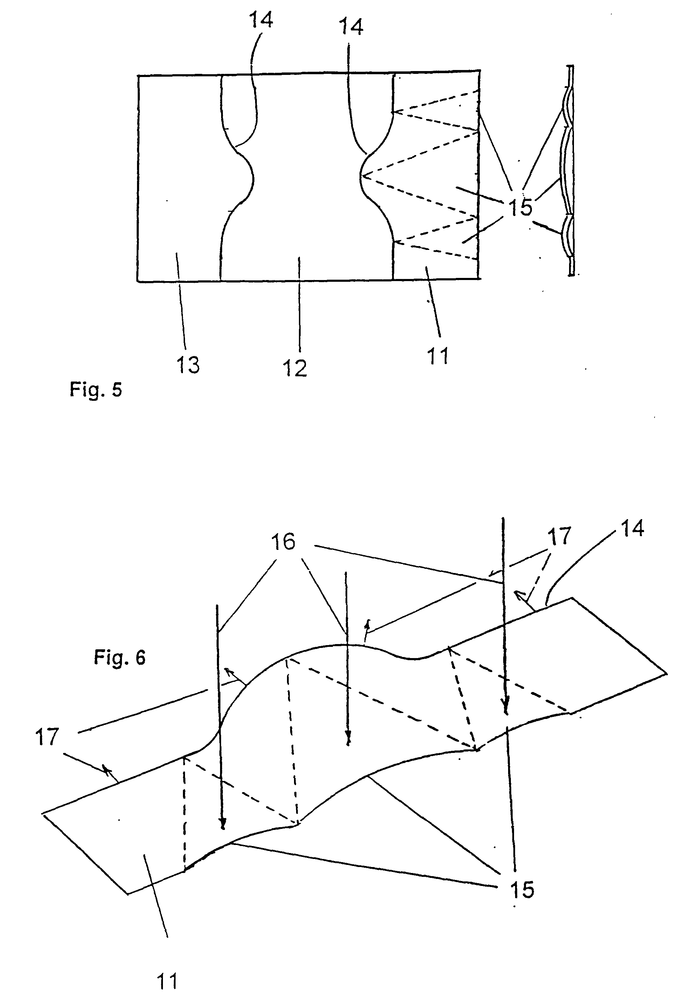

- Fig.5: drei Formzuschnitte 11, 12, 13 mit bogenförmigen Schweißkanten 14 in Schweißposition und eingepreßten fächerförmigen Wölbungen 15 in Formzuschnitt 11,
- Fig.6: eine perspektivische Ansicht des Formzuschnittes 11 nach Fig. 5 mit den eingepreßten fächerförmigen Wölbungen 15. Durch geeignete Kräfte 16 auf die Wölbungen 15 weicht die Schweißkante 14 in Richtung 17 aus.

## Patentansprüche

1. Verfahren zum Herstellen geschweißter Stahlblechplatinen aus Formzuschnitten mit nichtlinearen Schweißnähten, wobei die Formzuschnitte ausgestanzt und mittels eines Laser- oder Elektronenstrahls miteinander verschweißt werden, **dadurch gekennzeichnet, daß** in mindestens einen von mindestens zwei zu verschweißenden Formzuschnitten vor dem Ausstanzen flache Wölbungen gepreßt werden und beim Paaren der zu verschweißenden Formzuschnitte die Wölbungen gegen die Unterlage gedrückt werden, so daß die Schweißkanten dieses Formzuschnittes sich an die Kanten eines anderen Formzuschnittes anlegen.

2. Verfahren nach Anspruch 1, **dadurch gekennzeichnet, daß** die gegeneinander spaltfrei positionierten Blechkanten zunächst mit einem Laser über die Nahtlänge punktförmig geheftet und anschließend mit einem Laser veschweißt werden.

3. Verfahren nach Anspruch 1 oder 2, **dadurch gekennzeichnet, daß** bei dreiteiligen oder mehrteiligen Schweißplatinen mindestens zwei Formzuschnitte mit vorgeformten Wölbungen zur Korrektur von Formabweichungen der Schweißkanten versehen werden.

## Claims

1. A method for manufacturing welded sheet steel plates from formed blanks with non-linear welding seams, wherein the formed blanks are punched and welded together with the aid of a laser or electron beam, **characterised in that** in at least one of at least two formed blanks to be welded, flat cambers are pressed before punching and when the formed blanks to be welded are paired, the cambers are pressed against the base so that the weld edges of this formed blank abut against the edges of another formed blank.

2. A method according to claim 1, **characterised in that** the edges of the sheets placed against each other without any gaps are first tacked point-wise with a laser over the length of the seam and then laser welded.

3. A method according to claim 1 or 2, **characterised in that** for three-part or multipart welded plates at least two formed blanks with pre-formed cambers are provided to correct deviations in the shape of the weld edges.

## Revendications

1. Procédé pour fabriquer des platines en tôle d'acier soudées à partir de pièces de forme découpées, avec des cordons de soudure non linéaires, selon lequel on découpe par poinçonnage les pièces de forme et on les soude entre elles à l'aide d'un faisceau laser ou d'un faisceau d'électrons, **caractérisé en ce que** dans au moins l'une d'au moins deux pièces de forme découpées devant être soudées, on forme par pressage, avant le découpage, des parties cintrées planes et que lors de l'appairage des pièces de forme découpées devant être soudées, on repousse les parties cintrées contre le support de sorte que les bords de soudage de cette pièce de forme découpée s'appliquent contre les bords d'une autre pièce de forme découpée.

2. Procédé selon la revendication 1, **caractérisé en ce qu'**on agrafe tout d'abord ponctuellement à l'aide d'un laser les bords de tôle, positionnés sans jeu les uns contre les autres, sur la longueur de la jonction et qu'on les soude ensuite en utilisant un laser.

3. Procédé selon la revendication 1 ou 2, **caractérisé en ce que** dans le cas de platines de soudage formées de trois éléments ou de plusieurs éléments, on forme, dans au moins deux pièces de forme découpées, des parties cintrées préformées pour corriger des écarts de forme des bords soudés.
